# FASCICULE DE BREVET EUROPEEN

(11) **EP 3 077 687 B1**
(45) Date de publication et mention de la délivrance du brevet: **18.10.2017**
(21) Numéro de dépôt: 14828191.8
(22) Date de dépôt: 05.12.2014
(51) Int. Cl.: F16C 17/02, F16C 27/02

(54) **PALIER AÉRODYNAMIQUE À FEUILLES**
AERODYNAMISCHES FOLIENLAGER
AERODYNAMIC FOIL BEARING

(30) Priorité: 05.12.2013 FR 1362192
(43) Date de publication de la demande: 12.10.2016
(73) Titulaire: Liebherr-Aerospace Toulouse SAS, 31200 Toulouse (FR)
(72) Inventeur: ROCCHI, Jérôme, F-31380 Roqueseriere (FR); GRAU, Grégory, F-82210 Castelmayran (FR)
(74) Mandataire: Cabinet Plasseraud
(86) Numéro de dépôt international: PCT/FR2014/053189
(87) Numéro de publication internationale: WO 2015/082862

(56) Documents cités:
- KR-A- 20040 029 700
- US-A- 4 277 113
- US-A1- 2003 169 951
- US-A1- 2005 201 646
- US-A1- 2006 018 575
- K. NALEPA: "DEVELOPMENT OF THE FOIL BEARING TECHNOLOGY", TECHNICAL SCIENCES, vol. 12, 2009, pages 229-240, XP002727807, DOI: 10.2478/v10022-009-0019-2

## Description

La présente invention concerne un palier aérodynamique à feuilles.

Un palier aérodynamique, ou palier à air, est un palier qui supporte la charge qui lui est soumise grâce à une masse d'air sous pression qui s'introduit entre un rotor tournant à grande vitesse et un stator. Des paliers de ce type sont par exemple utilisés dans des applications dans lesquelles des rotors tournent à des vitesses élevées, où les charges sont généralement limitées et/ou une grande précision est requise. L'utilisation de l'air à la place d'un fluide tel de l'huile pour réaliser la lubrification entre le rotor et le stator permet de limiter la puissance dissipée par frottement fluide car la viscosité de l'air est bien moindre que celle d'une huile, même si cette dernière est peu visqueuse.

Pour assurer une lubrification également lors des phases de démarrage et d'arrêt, lorsque la pression de l'air entre le rotor et le stator n'est pas suffisante pour permettre le maintien d'un film porteur entre ces deux pièces, il est connu d'introduire dans le palier une structure à feuilles entre le rotor et le stator qui assure la lubrification à faibles vitesses de rotation en perturbant le moins possible le fonctionnement du palier à air à hautes vitesses.

Le document US-2005/0201646 divulgue un palier à air avec une feuille formant une boucle fermée avec plusieurs sommets et un nombre correspondant de surfaces bombées et arquées. Un matériau élastique ou viscoélastique vient prendre place entre la feuille et un stator correspondant. Dans ce document, la géométrie du palier à feuilles forme un convergent naturel sans faire appel à une déformation de la structure souple du palier. Le matériau élastique ou viscoélastique vient donner une caractéristique élastique et/ou une caractéristique d'amortissement.

Le document WO-2011/025087 montre quant à lui un palier aérodynamique à feuilles qui comporte une feuille supérieure le long de la périphérie intérieure d'un alésage d'un corps de palier. Une feuille ondulée montée sur raidisseurs (appelée "bump foil" en anglais) est placée quant à elle entre la feuille supérieure et la surface intérieure de l'alésage. La feuille ondulée apporte dans la liaison entre un rotor et son palier à la fois de la raideur et de l'amortissement.

Le document KR20040029700 réalise la combinaison d'une structure proche de celle illustrée par le document WO-2011/025087 avec une feuille viscoélastique qui vient par-dessus la feuille supérieure et est donc destinée à venir au contact du rotor. La structure proposée ici est de permettre une vitesse de rotation plus élevée en amortissant les vibrations du rotor.

La présente invention a pour but de fournir un palier qui réalise à la fois un amortissement visqueux et un amortissement par frottement mais dans lequel un découplage est réalisé entre les deux amortissements. Avantageusement, un palier selon la présente invention permettra d'absorber, au moins en partie, les phénomènes vibratoires sous-synchrones que l'on peut observer dans les paliers aérodynamiques de l'art antérieur.

De préférence, la présente invention proposera une structure simple à réaliser et à mettre en oeuvre.

À cet effet, la présente invention propose un palier aérodynamique à feuilles présentant une douille à l'intérieur de laquelle sont disposés :
- une feuille dite feuille supérieure, et
- une feuille ondulée disposée entre la feuille supérieure et la douille.

Selon la présente invention, un tel palier aérodynamique comporte en outre une feuille de matériau viscoélastique disposée entre une face intérieure de la douille et la feuille ondulée.

Le rajout d'une feuille de matériau viscoélastique permet de créer un amortissement visqueux. Son positionnement original permet de réaliser un découplage entre l'amortissement procuré par frottement (amortissement de Coulomb obtenu entre la feuille ondulée et la feuille supérieure) et l'amortissement visqueux. De façon surprenante, une telle structure permet au moins d'amortir sensiblement les fréquences sous-synchrones du rotor assurant ainsi une plus grande stabilité pour le rotor, même à vitesses de rotation (très) élevées.

Pour améliorer les caractéristiques d'amortissement par frottement d'un palier selon la présente invention, il est proposé qu'un tel palier aérodynamique à feuilles comporte en outre une feuille de protection disposée entre la feuille de matériau viscoélastique et la feuille ondulée. Cette feuille de protection peut être par exemple réalisée dans un alliage à base de nickel et contenant du chrome. Dans une forme de réalisation préférée, il s'agit d'une feuille réalisée dans un alliage commercialisé sous la marque Inconel.

Pour réaliser un maintien mécanique de la feuille viscoélastique, sans utilisation de colle, il est proposé que la face intérieure de la douille comporte une nervure longitudinale dont l'épaisseur correspond sensiblement à l'épaisseur de la feuille de matériau viscoélastique. La feuille ondulée présente deux bords longitudinaux par rapport à la douille ; un bord forme une extrémité libre et l'autre bord est avantageusement ici fixé sur la nervure longitudinale.

La présente invention concerne également une turbomachine et/ou un dispositif de conditionnement d'air, caractérisé en ce qu'il comporte un palier aérodynamique tel que décrit ci-dessus.

Des détails et avantages de la présente invention apparaitront mieux de la description qui suit, faite en référence au dessin schématique annexé sur lequel :
La figure 1 est une vue en perspective d'un fourreau utilisé pour la mise en oeuvre de la présente invention,
La figure 2 est une vue schématique en coupe transversale d'un palier selon la présente invention,
La figure 3 est un graphe tridimensionnel illustrant les fréquences obtenues avec un palier sans matériau viscoélastique, et
La figure 4 est une vue similaire à celle de la figure 3 pour un palier selon la présente invention.

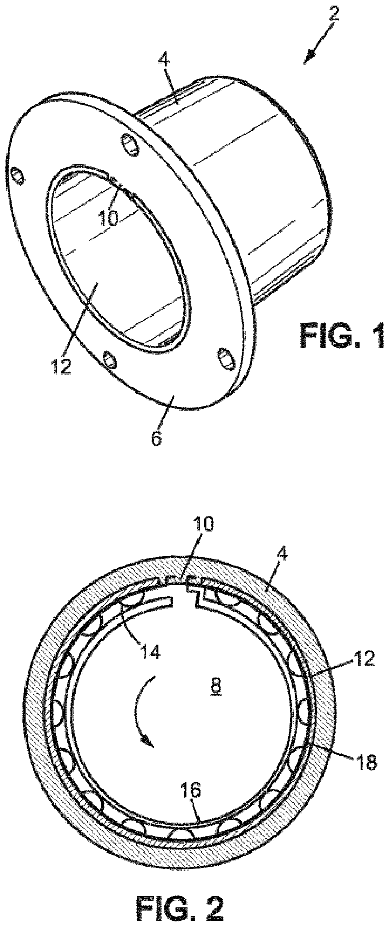

La figure 1 illustre un fourreau 2 qui est utilisé pour la mise en oeuvre de la présente invention. Il s'agit d'une pièce métallique qui présente une douille 4 de forme cylindrique circulaire ainsi qu'une bride de fixation 6 réalisée à une extrémité de la douille 4.

La douille 4 définit un logement cylindrique circulaire destiné à loger un rotor 8 (figure 2). Ce logement comporte une surface intérieure de forme globale cylindrique circulaire. On remarque toutefois la présence d'une nervure 10 longitudinale qui s'étend sur toute la longueur du logement et qui vient en saillie à l'intérieur de ce logement.

De part et d'autre de la nervure 10, une feuille dite feuille viscoélastique 12 vient recouvrir la surface intérieure du logement. La feuille viscoélastique 12 et la nervure 10 sont de formes adaptées de manière à recréer ensemble une surface intérieure cylindrique circulaire concentrique à la surface du logement de la douille 4.

La feuille viscoélastique 12 est réalisée dans un matériau viscoélastique. Le matériau utilisé ici peut être par exemple choisi parmi les silicones, les caoutchoucs naturels ou synthétiques, les acryliques ou les gels macromoléculaires. Un élément élastique (ou plusieurs) peut être noyé dans la feuille viscoélastique 12. Ainsi, des ressorts, ou une feuille ondulée, peuvent être éventuellement associés au matériau viscoélastique de la feuille viscoélastique 12.

Dans une forme de réalisation préférée, la feuille viscoélastique 12 est choisie pour pouvoir résister à des températures relativement élevées, allant jusqu'au-delà de 200° C. Elle peut alors être réalisée (avec ou de préférence sans élément élastique) dans un matériau utilisé pour la réalisation de joints toriques, par exemple un matériau portant la référence 7DF710A et commercialisé sous la marque "le joint français". Ce matériau peut être utilisé jusqu'à 250° C en conservant ses propriétés viscoélastiques.

Au dessus de la feuille viscoélastique 12 vient prendre place une feuille ondulée 14 plus connue sous la dénomination anglaise "bump foil".

Tout type de feuille ondulée connu pour des paliers aérodynamiques peut être utilisé ici. L'orientation de la feuille ondulée 14 peut être changée également. Dans la forme de réalisation représentée, les ondulations sont sensiblement en forme de demi-cylindres semi-circulaires. Les parties arrondies des demi-cylindres sont orientées vers le haut (le rotor). Elles pourraient en variante également être orientées vers le bas (le fourreau).

La feuille ondulée 14 peut être par exemple une feuille présentant des ondulations longitudinales répétées selon un pas régulier. La forme des ondulations, le pas, la complexité des motifs peut varier. À titre d'exemple, la figure 2 du document EP-0717207 montre diverses formes possibles d'ondulations. Il est aussi envisageable d'avoir plusieurs feuilles ondulées comme par exemple illustré dans le document FR-2670545 qui met en oeuvre une première feuille ondulée appelée élément-ressort externe (et portant la référence 6 sur le dessin) et une seconde feuille ondulée appelée élément-ressort intermédiaire (et portant la référence 5 sur le dessin).

La feuille ondulée 14 présente deux bords longitudinaux par rapport, d'une part, aux ondulations de ladite feuille et, d'autre part, à la douille 4. Chaque bord longitudinal forme ainsi une extrémité de la feuille ondulée 14 et ces deux extrémités sont rapprochées l'une de l'autre de telle sorte que la feuille ondulée 14 soit recourbée et présente une forme sensiblement cylindrique. De manière habituelle, on peut prévoir que la feuille ondulée 14 présente une extrémité fixe par rapport au logement qui la reçoit et une extrémité libre. De préférence, l'extrémité fixe est solidarisée de la douille 4 au niveau de la nervure 10 longitudinale.

Une feuille supérieure 16 est destinée à venir en vis-à-vis du rotor 8. Elle est apte à conditionner la formation d'un film fluide (film d'air) entre le rotor 8 et elle-même. Cette feuille supérieure 16 est une feuille souple, recourbée de manière à présenter une forme sensiblement cylindrique circulaire autour du rotor 8. La nature du matériau utilisé pour la réalisation de cette feuille et son épaisseur lui confèrent une raideur assez faible pour lui permettre d'épouser la forme du rotor. Cette feuille supérieure 16 doit également assurer une portée suffisante pour le fluide en phase de démarrage et/ou de faible charge.

La feuille supérieure 16 peut être par exemple réalisée dans un matériau métallique et alors être par exemple en acier inoxydable, bronze phosphoreux, laiton, cuivre, aluminium (ou un alliage à base de ces métaux) ou bien dans une résine comme par exemple le PTFE (ou PolyTétraFluorEthylène). À titre d'exemple purement illustratif et non limitatif, l'épaisseur de la feuille supérieure peut être comprise entre 10 et 100 µm (1 µm = 10⁻⁶ m).

Dans une forme de réalisation préférée, comme illustré sur la figure 2, une feuille de protection 18 est disposée entre la feuille ondulée 14 et la feuille viscoélastique 12. Le matériau utilisé ici peut être un alliage à base de nickel. Une forme de réalisation préférée prévoit l'utilisation d'un alliage commercialisé sous la marque déposée Inconel, par exemple la référence Inconel 750.

La feuille de protection 18 assure ainsi l'interface entre la feuille viscoélastique 12 et la feuille ondulée 14 et procure un support à cette dernière.

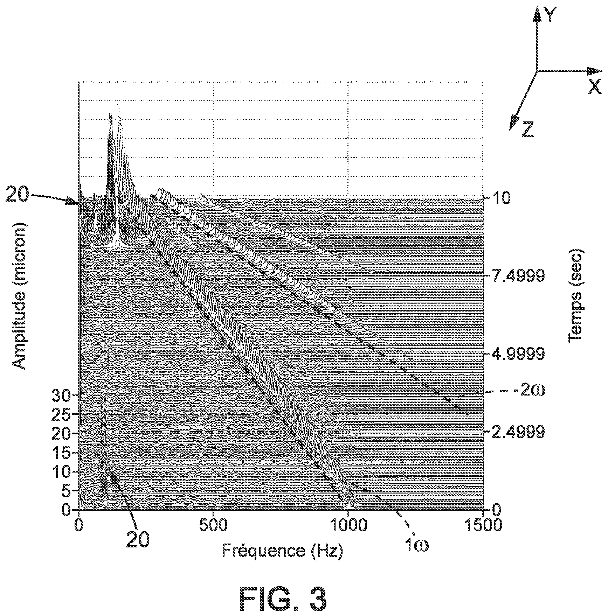

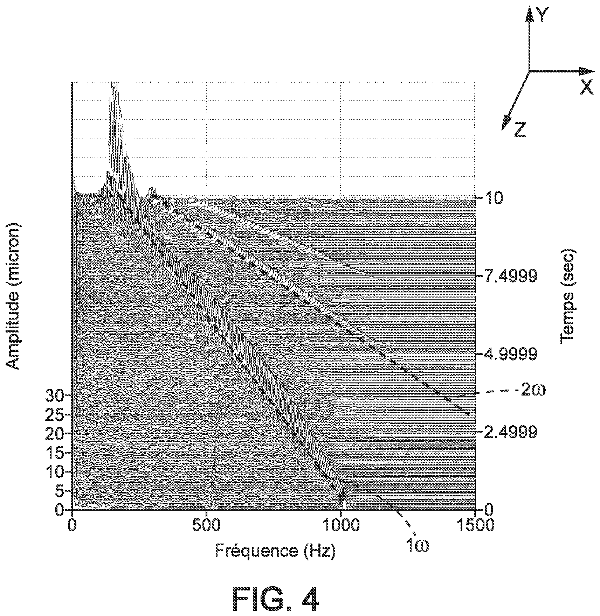

Un palier tel que décrit ci-dessus permet de générer un amortissement de type visqueux et d'absorber les phénomènes vibratoires sous-synchrones. À titre d'illustration, les figures 3 et 4 sont utilisées pour comparer un comportement dynamique d'un rotor soutenu par un palier "classique", c'est-à-dire sans couche viscoélastique correspondant à la feuille viscoélastique 12 (figure 3) avec celui d'un palier selon l'invention avec une couche viscoélastique entre le fourreau et sa feuille ondulée (figure 4).

Les figures 3 et 4 représentent un enregistrement des déplacements du rotor 8 lors d'une décélération depuis 60.000 tours par minute (tr/min) correspondant donc à une fréquence de 1.000 Hz jusqu'à 10.000 tr/min correspondant à environ 166 Hz. Il s'agit sur ces figures d'un assemblage de transformées de Fourrier (FFT) pour une succession d'instants. L'axe des x représente les fréquences, l'axe des y correspond à l'amplitude du déplacement associé tandis que l'axe des z représente le temps.

Sur chaque figure (figures 3 et 4), on a repéré une ligne principale nommée 1ω qui représente l'harmonique principale correspondant donc à la vitesse de rotation. Une deuxième ligne nommée 2ω correspond à la première harmonique à une fréquence double de l'harmonique principale. Toutes les fréquences situées en dessous (inférieures) de la ligne 1ω sont appelées fréquences "sous-synchrones" et sont liées à des instabilités de fonctionnement de palier.

Sur la figure 3, on remarque que le contenu fréquentiel obtenu fait apparaître de telles fréquences "sous-synchrones" 20. Des instabilités de fonctionnement des paliers sont donc relevées avec un palier sans feuille viscoélastique.

En revanche, en observant la figure 4, on remarque que le contenu fréquentiel obtenu ne présente pas de fréquences "sous-synchrones", ce qui correspond à comportement du palier avec une grande stabilité.

La structure proposée ci-dessus permet de rajouter dans le palier selon l'invention, par rapport à un palier "classique" de l'art antérieur, un amortissement de type visqueux en plus de l'amortissement lié au film d'air et de l'amortissement lié aux frottements dans la structure de feuilles (feuille ondulée 14 et feuille supérieure 16).

Cette structure peut être utilisée pour des machines tournant à des vitesses très élevées, supérieures à 100.000 tr/min. Pour des vitesses aussi élevées, il convient de veiller à choisir un matériau pour la réalisation de la feuille viscoélastique 12 qui conserve ses propriétés également à des températures élevées (allant jusqu'à 200° C, voire 250° C).

Lorsque de telles vitesses sont atteintes, les efforts liés aux balourds présents dans le rotor deviennent plus importants même si la classe d'équilibrage reste la même. La structure de palier proposée par la présente invention permet d'introduire par rapport à des paliers de l'art antérieur sans couche viscoélastique un amortissement supplémentaire qui permet d'absorber les efforts supplémentaires liés aux machines électriques à très hautes vitesses.

Le montage proposé par la présente invention, avec la feuille viscoélastique "sous" la feuille ondulée permet de réaliser un montage sans collage. La feuille viscoélastique montée de part et d'autre de la nervure longitudinale décrite plus haut est tenue mécaniquement dans le fourreau. Le maintien axial est quant à lui réalisé par exemple de manière classique à l'aide de flasques de maintien qui retiennent tout le palier à feuilles. Cette absence de collage est un facteur qui permet l'utilisation du palier à hautes vitesses (et donc aussi à hautes températures) car peu de colles résistent à des températures supérieures à 180° C.

Lorsqu'une feuille de protection est prévue, la feuille ondulée peut se déplacer relativement par rapport à cette feuille de protection. Un frottement est ainsi réalisé et induit un amortissement de Coulomb.

La structure décrite permet d'avoir un amortissement de type visqueux et un amortissement par frottements classique mais ces deux amortissements sont découplés. Les ondulations de la feuille ondulée peuvent continuer à se déplacer relativement à la feuille supérieure lisse (et éventuellement aussi par rapport à la feuille de protection, lisse également) réalisant un amortissement de Coulomb. L'amortissement visqueux apporté par la couche viscoélastique est indépendant de cet amortissement par frottements. On rajoute ici une caractéristique nouvelle (l'amortissement visqueux) sans influencer, voire détruire, les caractéristiques d'amortissement déjà présentes dans le palier.

La présente invention ne se limite pas à la forme de réalisation préférée illustrée sur le dessin annexé et aux variantes de réalisation évoquées. Elle concerne également toutes les variantes à la portée de l'homme du métier dans le cadre des revendications ci-après.

## Revendications

1. Palier aérodynamique à feuilles présentant une douille (4) à l'intérieur de laquelle sont disposés :
- une feuille dite feuille supérieure (16), et
- une feuille ondulée (14) disposée entre la feuille supérieure (16) et la douille (4),
**caractérisé en ce qu'**il comporte en outre
- une feuille (12) de matériau viscoélastique disposée entre une face intérieure de la douille (4) et la feuille ondulée (14).

2. Palier aérodynamique à feuilles selon la revendication 1, **caractérisé en ce qu'**il comporte en outre une feuille de protection (18) disposée entre la feuille (12) de matériau viscoélastique et la feuille ondulée (14).

3. Palier aérodynamique à feuilles selon la revendication 2, **caractérisé en ce que** la feuille de protection (18) est réalisée dans un alliage à base de nickel et contenant du chrome.

4. Palier aérodynamique à feuilles selon l'une des revendications 1 à 3, **caractérisé en ce que** la face intérieure de la douille (4) comporte une nervure (10) longitudinale dont l'épaisseur correspond sensiblement à l'épaisseur de la feuille (12) de matériau viscoélastique.

5. Palier aérodynamique à feuilles selon la revendication 4, **caractérisé en ce que** la feuille ondulée (14) présente deux bords longitudinaux par rapport à la douille (4), **en ce qu'**un bord forme une extrémité libre et **en ce que** l'autre bord est fixé sur la nervure (10) longitudinale.

6. Turbomachine, **caractérisée en ce qu'**elle comporte un palier aérodynamique selon l'une des revendications 1 à 5.

7. Dispositif de conditionnement d'air, **caractérisé en ce qu'**il comporte un palier aérodynamique selon l'une des revendications 1 à 5.

## Patentansprüche

1. Aerodynamisches Folienlager, das eine Buchse (4) aufweist, in deren Innerem angeordnet sind:
- eine als obere Folie (16) bezeichnete Folie und
- eine gewellte Folie (14), die zwischen der oberen Folie (16) und der Buchse (4) angeordnet ist,
**dadurch gekennzeichnet, dass** es ferner umfasst:
- eine Folie (12) aus viskoelastischem Material, die zwischen einer Innenfläche der Buchse (4) und der gewellten Folie (14) angeordnet ist.

2. Aerodynamisches Folienlager nach Anspruch 1, **dadurch gekennzeichnet, dass** es ferner eine Schutzfolie (18) umfasst, die zwischen der Folie (12) aus viskoelastischem Material und der gewellten Folie (14) angeordnet ist.

3. Aerodynamisches Folienlager nach Anspruch 2, **dadurch gekennzeichnet, dass** die Schutzfolie (18) aus einer Legierung auf Nickelbasis, die Chrom enthält, gebildet ist.

4. Aerodynamisches Folienlager nach einem der Ansprüche 1 bis 3, **dadurch gekennzeichnet, dass** die Innenfläche der Buchse (4) eine Längsrippe (10) umfasst, deren Dicke im wesentlichen der Dicke der Folie (12) aus viskoelastischem Material entspricht.

5. Aerodynamisches Folienlager nach Anspruch 4, **dadurch gekennzeichnet, dass** die gewellte Folie (14) zwei Längsränder relativ zur Buchse (4) aufweist, dass ein Rand ein freies Ende bildet und dass der andere Rand an der Längsrippe (10) befestigt ist.

6. Strömungsmaschine, **dadurch gekennzeichnet, dass** sie ein aerodynamisches Lager nach einem der Ansprüche 1 bis 5 umfasst.

7. Klimaanlage, **dadurch gekennzeichnet, dass** sie ein aerodynamisches Lager nach einem der Ansprüche 1 bis 5 umfasst.

## Claims

1. Aerodynamic foil bearing having a sleeve (4) inside which are arranged:
- a foil referred to as the top foil (16), and
- a bump foil (14) arranged between the top foil (16) and the sleeve (4), **characterised in that** it further comprises
- a foil (12) of viscoelastic material arranged between an inner face of the sleeve (4) and the bump foil (14).

2. Aerodynamic foil bearing according to claim 1, **characterised in that** it further comprises a protective foil (18) arranged between the foil (12) of viscoelastic material and the bump foil (14).

3. Aerodynamic foil bearing according to claim 2, **characterised in that** the protective foil (18) is made of a nickel-based alloy containing chromium.

4. Aerodynamic foil bearing according to one of claims 1 to 3, **characterised in that** the inner face of the sleeve (4) comprises a longitudinal rib (10) of a thickness substantially corresponding to the thickness of the foil (12) of viscoelastic material.

5. Aerodynamic foil bearing according to claim 4, **characterised in that** the bump foil (14) has two longitudinal edges relative to the sleeve (4), **in that** one edge forms a free end and **in that** the other edge is fixed to the longitudinal rib (10).

6. Turbomachine, **characterised in that** it comprises an aerodynamic bearing according to one of claims 1 to 5.

7. Air conditioning device, **characterised in that** it comprises an aerodynamic bearing according to one of claims 1 to 5.
